Europäisches Patentamt

European Patent Office

Office européen des brevets

(11) Publication number: **0 455 983 A1**

# EUROPEAN PATENT APPLICATION

(21) Application number: **91105292.6**

(51) Int. Cl.5: **G01D 5/243**, G01D 3/02

(22) Date of filing: **03.04.91**

(30) Priority: **08.05.90 US 520414**

(43) Date of publication of application:
**13.11.91 Bulletin 91/46**

(84) Designated Contracting States:
**AT BE CH DE DK ES FR GB GR IT LI LU NL SE**

(71) Applicant: **THE WARNER & SWASEY COMPANY**
**11000 Cedar Avenue**

**Cleveland Ohio 44106(US)**

(72) Inventor: **Brandstetter, Robert W.**
**418 Cherrywood Drive**
**Fairborn, Ohio 45324-4015(US)**

(74) Representative: **Schaumburg, Thoenes & Englaender**
**Mauerkircherstrasse 31 Postfach 86 07 48**
**W-8000 München 86(DE)**

(54) Position measuring device with a phase adjust circuit and process for phase adjustment.

(57) A position measuring device with a phase adjust circuit and phase adjust circuit process in which errors in the phase relationship between a pair of nominally 0° and 90° phase related quadrature signals may be corrected, by deriving a correction signal comprised of a selectively scaled and signed form of the 0° signal and vectorially adding the correction signal to the 90° signal. The circuit allows for electronic correction of the skew angle of a reading head grating in an optical type distance transducer.

FIG-2

This invention relates to devices for measuring position shifts electronically, such as linear and rotary encoders and resolvers. In order to generate electrical signals corresponding to displacements of a probe, coordinate measuring machines have commonly employed a main grating consisting of a linear series of closely spaced grating lines traversed by a reading head carrying a small transparent grating skewed at a slight angle to the main grating. Optical interference between the gratings creates a pattern of transversely shifting light and dark areas, a pattern referred to as a Moire' fringe. This pattern is detected by an array of photosensors contained in the reading head.

Since the reading head may move in either direction, and since the analog signal value repeats itself within the course of each cycle, there is an inherent ambiguity in the interpolation signal value.

To resolve this ambiguity, a refinement has been utilized, in which a second electrical signal is generated, equal in magnitude to the first signal of 90° out of phase. A pair of quadrature signals is thus provided. These quadrature signals are combined to provide unique signal information linearly related to the position of the reading head along the interline space between lines in the grating scale. That is, the combination of the quadrature signals provides a linear function from which it may be determined without ambiguity at what point the reading head is in the interline space.

The reading head thus generates a pair of cyclically varying, 90° out of phase electrical output signals as the pattern moves across the sensors. The pattern shifts in precise correspondence with traversing of the reading head past each space between the main grating, and thus these electrical outputs comprise analog signals corresponding to the reading head displacment past the grating lines.

The analog signals are sinusoidal, and each cycle is completed by traverse of the reading over a complete space between grating lines. A running count of each complete cycle thus provides an indication of the total reading head displacement along the main grating.

An alternate means of constructing an optical grating/reading head system is to use a Vernier fringe optical method, also well known in the art, instead of the Moire fringe method described above, to, which method the present invention is equally applicable.

In order to attain finer resolution than the spacing between grating lines, interpolation circuits have been devised for subdividing these analog signals, as described in U.S. patent 4,225,931 issued on September 30, 1980 for "Interpolation Apparatus for Digital Electronic Position Measuring Instrument".

The phase angle between the quadrature signals must be precisely set at 90° for proper results, and this has been done in the past by careful manual adjustment of the skew angle between the reading head grating and the main grating to vary the Moire' fringe pattern. This procedure is time consuming and inconvenient since it requires removal of the machine covers and tedious mechanical adjustment of the reading head position while observing the Lissajous pattern of the photosensor outputs on a oscilloscope.

U.S. patent 4,462,083 issued on July 24, 1984 for "Method of Interval Interpolation" and U.S. patent 4,490,914 issued on January 1, 1985 for "Error Correction System for Position Measuring Instrument" both describe systems for correcting phase angle differences between quadrature signals used in position measuring devices. In U.S. patent 4,462,083, the correction values are determined by measurement and stored in a digital computer for use while making interpolation calculations. This approach requires additional electronic components and procedures, and complicated computer operations.

U.S. patent 4,490,914 describes a process requiring a separate magnetic track alongside the grating and means for generating and recording a correction signal for each analog signal. Subsequent adjustments of the phase angle changes would be difficult.

## SUMMARY OF THE INVENTION

The present invention comprises a simple circuit and process for adjusting the phase relationship between quadrature signals in a position measuring device. The circuit comprises an arrangement for algebraically adding the 0° analog signal to its inverse in an adjustable proportion of each signal so as to enable generation of a correction signal comprised of a selectively signed and scaled down 0° signal. This correction signal may be generated by feeding the 0° signal to one side of a potentiometer and an inverted or 180° phase shifted version of the 0° analog signal to the other side, with the algebraic sum fed out from the potentiometer slider.

Thus, an infinitely selectively adjustable scaling down of the 0° analog signal of either a positive or negative sign may be generated from the 0° analog signal.

This correction signal, when added vectorially to the nominally 90° analog signal results in a phase shifting of the 90° analog signal in either direction, depending on the sign of the correction signal, and to a degree depending on the magnitude of the correction signal, the sign and magnitude of the correction signal selectively set by the potentiometer slide adjustment. Since the correction signal may be adjusted in sign and magnitude by movement of the potentiometer slider, the phase of the $90°$ analog signal may be shifted appropriately to insure a perfect $90°$ phase relationship with the $0°$ analog signal. By using an extra buffer/inverter to invert the A $(0°)$ signal, a DC balanced correction signal is realized. This additional inverter provides the added feature of eliminating cross coupling of the phase adjustment potentiometer onto the B $(90°)$ signal offset adjustment pot.

Observation of the Lissajous pattern of the $0°$ and $90°$ sinusoidal analog signals on an oscilloscope allows convenient detection of the proper phase relationship when achieved by proper adjustment of the potentiometer slide.

This procedure has the advantage of being much less time consuming than the mechanical adjustment of the reading head skew angle without requiring substantial additional circuitry or computer calculations, and may be done conveniently during routine maintainence.

DESCRIPTION OF THE DRAWINGS

FIGURE 1 is a perspective view of a coordinate measuring machine with a diagrammatic representation of the associated electronics.

FIGURE 2 is a block diagram representation of the phase correction circuit according to the present invention.

FIGURE 3 is a phasor (i.e., vector) diagram of the analog and correction signals, depicting the vector addition of the correction signal to the nominal $90°$ analog signal to correct a condition where the signal is slightly less than $90°$ out of phase with the $0°$ signal.

DETAILED DESCRIPTION

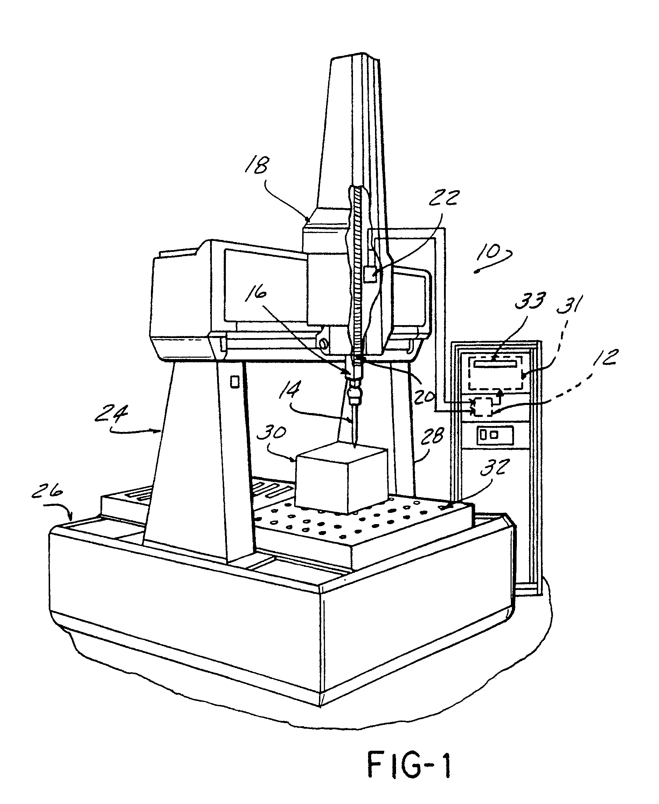

FIGURE 1 illustrates a coordinate measuring machine (CMM) 10, comprising a position shift measuring device of a type with which the phase correction circuit of the present invention is intended to be used. The CMM 10 may be configured in various forms, the illustrative example a machine described in detail in U.S. patent 4,682,418 issued on July 28, 1987 for a "Coordinate Measuring Machine".

A probe 14 is attached to a probe shaft 16 supported for vertical movement on a carriage 18. The probe shaft 16 has a main grating 20 affixed thereto moving past a reading head 22 mounted to the carriage 18. A cover 19 encloses the reading head 22, which is adjustably mounted on the carriage 18 so as to be slightly skewed with respect to the main grating 20 in the manner well known in the art. The carriage 18 is mounted for horizontal movement on a second carriage 24, in turn mounted for horizontal movement in an orthogonal direction on a base 26.

Similar grating - reading head arrangements (not shown) are provided for each carriage 18 and 24 so as to enable generation of electrical signals corresponding to movement along each orthogonal axis in the manner well known in the art.

Thus, as the tip 28 of the probe 14 is moved between points on a workpiece 30 supported on a table 32, the extent of movement is measured to generate a signal corresponding to the distance between the points on the workpiece 30.

As described above, there are two well known optical techniques for developing quardrature sinusoidal signals corresponding to the extent of movement of each member involving an optical distance transducer using an array of photo sensors. The first technique detects a Moire' fringe shadow pattern created by a small section of grating carried by the reading head 22 and slightly skewed with respect to the corresponding main grating 20 affixed to one of the machine members. The second technique detects a Vernier fringe shadow pattern created by using a parallel (nonskewed) transparent grating carried on the reading head 22 of slightly higher or lower pitch (line spacing) than the stationary grating 20 affixed to one of the machine members.

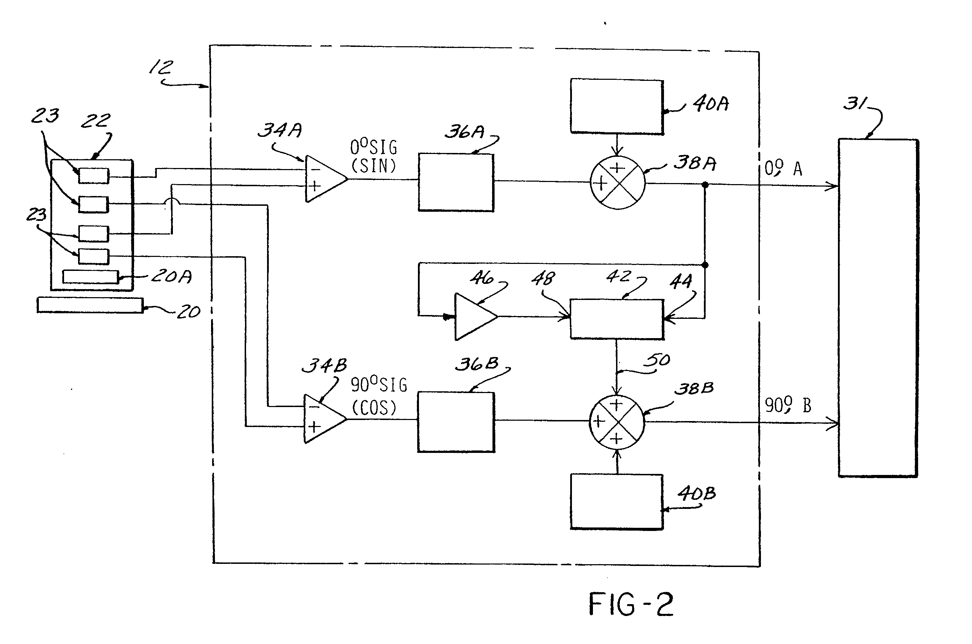

The reading head 22 contains the array of photosensors (FIGURE 2) detecting the shadow pattern created by optical interference between the main grating 20 and a reading head grating 20A, thus generating a pair of electrical analog output signals which each vary sinusoidally, and are nominally $90°$ out-of phase with each other, thus providing quadrature signals.

A complete cycle of these signals occurs upon the reading head 22 traversing a single grating interline space of the main grating 20.

These analog reading output signals are processed in reading head signal adjustment circuitry 12 according to the present invention, and the electronic circuitry 31 receives the adjusted reading head output signals and processes the same for use as by a display 33 displaying the signal in standard measurement units.

FIGURE 2 shows the reading head signal adjusting circuitry 12 according to the present invention in detail.

Two pairs of analog signals are output from an array of photosensors 23 positioned above grating 20A on the reading head 22.

Each pair of the signals are comprised of inverted signs of each other and are each differenced in a corresponding differential amplifier 34A, 34B. The output of amplifier 34A comprises a $0°$

or sine analog signal, A, and the output of amplifier 34B comprises a 90°, cosine analog signal, B. The expedient of differencing pairs of photosensor output signals provides improved common mode rejection in the manner well known in the art.

The 0° and 90° signals are routed through respective gain adjust potentiometers 36A, 36B, which enable adjustment of the amplitude of each of these signals.

The output of the gain adjust potentiometers 36A, 36B is input into respective offset summing amplifiers 38A, 38B each of which also receive outputs from offset adjustment potentionmeters 40A, 40B. The offset adjustment potentiometers enable summing of a variable DC component into the respective analog signals (A,B) to offset these signals in the manner well known in the art.

The improvement according to the present invention comprises the addition of a phase adjustment potentiometer 42, which receives an input on one side 44 from the 0° analog A signal. The 0° A signal is inverted by an inverter 46 to in effect be phase shifted 180° from the 0° A signal, and inputted to the other side 48 of the phase adjustment potentiometer 42.

The slider output 50 of the phase adjustment potentiometer 42 comprises a correction signal C applied to the 90° B signal gain and offset amplifier 38B.

In an alternate embodiment, input 48 can be derived directly from the output of 34A provided that 36A is an inverting amplifier, but this is a less preferred embodiment because it produces a slider output 50 which is not DC balanced, which in turn produces the undesired effect that changes in the phase adjustment 42 produce changes in the required DC offset adjustment 40B.

The correction signal C at the slider 50 of the phase adjustment potentiometer 42 is in effect an adjustably scaled down version of the 0° A signal, which also may be selectively inverted to either sign depending on whether the slidewire 50 is set to allow the 0° or 180° signal to predominate the other. This result occurs because a selective proportion of the 0° and 180° inputs are algebraically added together by means of this arrangement, the relative proportion of each signal added to the other able to be selectively controlled by the setting the position of the slider 50. At the center or neutral position of the slider 40, an equal proportion of each signal is added together, so that no correction signal is generated.

At slider positions on either side of neutral, a selectively scaled down positive or negative phase correction signal C would appear on the slider output 50.

This correction signal is vectorially added to the nominal 90° B signal in the amplifier 38B.

Accordingly, the sign and magnitude of the correction signal may be adjusted to shift the phase of the 90° B signal to correct any out of phase condition of the 90° B signal.

By observing the Lissajous figure generated by the 0° A, 90° B signals on an oscilliscope, an improper phase relationship can be detected by the appearance of the elliptical shape of this pattern, characteristically resulting when on improper phase relationship exists. This procedure could conveniently be done at the same time the gain and offset potentiometers 36A, 36B, 40A, 40B are set.

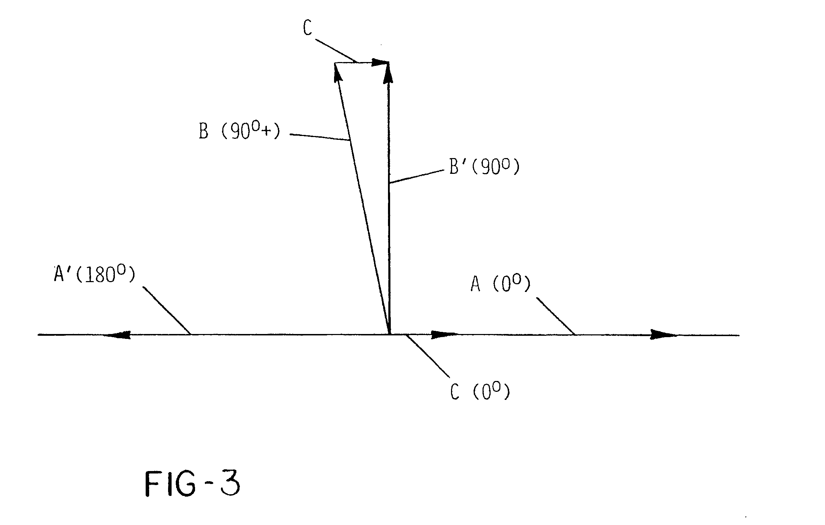

FIGURE 3 is a phasor, i.e., vector diagram illustrating diagrammatically how the vector summing of a scaled 0° correction C signal with an nominal 90° out of phase B signal results in a phase shift of the nominal 90° in a direction to generate a corrected B signal, at having a precise 90° phase relationship with the 0° A signal.

The correction signal C when added vectorially to the B signal at any phase angle produces a resultant phasor rotated clockwise to correct the phase of the B signal. The addition shown is for a slightly less than 90° out of phase signal brought to a precise 90° phase relationship.

A similar result will occur in a counterclockwise direction by a negative correction signal C.

This circuit and process may be employed in a variety of position measuring devices such as linear and rotary resolvers and encoders.

## Claims

1. A position measuring device (10) with a phase adjust circuit, said device adapted to measure the displacement of a first element (22) relative to a second element (14), including signal generating means (23) generating a pair of sinusoidal electrical signals nominally 90° out of phase with each other and in correspondence with the extent of relative motion of said first and second elements (22, 14), the improvement comprising a phase adjustment circuit for selectively varying the phase relationship between said pair of signals, said phase adjustment circuit comprising means (42) for deriving a correction signal comprised of a selectively scaled 0° phase signal, selectively signed either positively or negatively, and vector adding means (38B) for vectorially adding said correction signal to said nominal 90° signal, whereby the phase of said nominal 90° signal may be corrected by being shifted to a selective degree and direction by the vector addition of said selectively set correction signal.

2. The position measuring device according to claim 1 wherein said vector adding means (42) for deriving a correction circuit comprises means (42, 46, 48, 44) for algebraically adding a selectively controllable proportion of $0°$ signal to a $180°$ shifted form of said $0°$ signal.

3. The position measuring device according to claim 2 wherein said vector adding means comprises a potentiometer means (42).

4. The position measuring device according to anyone of claims 1 to 3 wherein said device includes a main grating, and a reading head movable along said main grating, said reading head including a grating skewed with respect to said main grating, said phase adjustment circuit enabling correction for improper setting of said skew angle.

5. The position measuring device according to anyone of claims 1 to 4 wherein said means for deriving a correction signal produces a correction signal DC balanced so as not to produce DC shift in said corrected output $90°$ signal as phase adjustment changes are made.

6. A process for shifting the relative phase between a pair of sinusoidal signals, a nominal $0°$ and a $90°$ phase signal, wherein said signals are more or less than $90°$ out of phase, in order that said $90°$ phase difference may be set precisely, comprising the step of deriving a correction signal consisting of value of said $0°$ signal scaled and signed so that when vectorially added to said nominal $90°$ phase signal said phase thereof is shifted in a direction and to a degree so as to precisely establish said $90°$ phase relationship, and adding said correction signal vectorially to said $90°$ phase signal.

7. The process according to claim 6 wherein said correction signal is derived by algebraically summing a selectively controlled proportion of said $0°$ signal and a $180°$ phase shifted form of said signal.

8. The process according to claim 7 wherein said step of algebraically adding said selective proportion of said signals comprises the steps of inputting said $0°$ signal to one side of a potentiometer, said $180°$ phase shifted version of said $0°$ signal to the other side, and outputting said signal through a movable slidewire of said potentiometer.

FIG-1

FIG-2

FIG-3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,Y | US-A-4 462 083 (E. SCHWEFEL)<br>* Abstract * | 1,4,6 | G 01 D 5/243<br>G 01 D 3/02 |
| Y | US-A-4 696 017 (MASHEFF et al.)<br>* Column 2, line 41 - column 4, line 51 * | 1,4,6 | |

**TECHNICAL FIELDS SEARCHED (Int. Cl.5)**

G 01 D

The present search report has been drawn up for all claims

| Place of search | Date of completion of search | Examiner |
|---|---|---|
| The Hague | 29 July 91 | LUT K. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document